# EUROPÄISCHE PATENTSCHRIFT

(11) **EP 0 583 759 B1**
(45) Veröffentlichungstag und Bekanntmachung des Hinweises auf die Patenterteilung: **05.03.1997**
(21) Anmeldenummer: 93113034.8
(22) Anmeldetag: 13.08.1993
(51) Int. Cl.: B60K 23/00, G05G 1/14

(54) **Doppelpedaleinrichtung für einen Fahrschulwagen**
Dual pedal apparatus for a driving school vehicle
Dispositif à double pédale pour un véhicule auto-école

(30) Priorität: 14.08.1992 DE 4226962
(43) Veröffentlichungstag der Anmeldung: 23.02.1994
(73) Patentinhaber: Schirrmann, Wolfram, D-80939 München (DE)
(72) Erfinder: Schirrmann, Wolfram, D-80939 München (DE)
(74) Vertreter: von Puttkamer, Nikolaus, Dipl.-Ing. Patentanwälte Haft, von Puttkamer Berngruber, Czybulka

(56) Entgegenhaltungen:
- WO-A-85/03369
- DE-B- 1 259 719
- FR-A- 2 422 200
- GB-A- 1 269 122
- GB-A- 2 241 050

## Beschreibung

Die Erfindung betrifft eine Doppelpedaleinrichtung für einen Fahrschulwagen nach dem Oberbegriff des Patentanspruches 1.

Bei herkömmlichen Doppelpedaleinrichtungen sind in einem Fahrschulwagen die beifahrerseitigen (Seite des Fahrlehrers) Pedale (Gaspedal, Bremspedal und Kupplungspedal) mechanisch, beispielsweise über konzentrisch angeordnete Rohrteile, mit den entsprechenden fahrerseitigen (Seite des Fahrschülers) Pedalen verbunden und gleichzeitig betätigbar. Ein Problem besteht dabei darin, daß die bekannten Doppelpedaleinrichtungen äußerst kompliziert aufgebaut und daher relativ teuer sind und daß zudem ihr Einbau in einen Fahrschulwagen äußerst zeitaufwendig und kompliziert ist. Zudem sind diese bekannten Doppelpedaleinrichtungen immer nur bei einem bestimmten Wagentyp verwendbar. Bei einen Wagenneukauf (Modell- oder Markenwechsel) muß eine neue Doppelpedaleinrichtung installiert werden. Für den Fahrlehrer ergeben sich daher hohe Zusatzkosten. Außerdem muß er vor einer Veräußerung des ausgemusterten Fahrschulwagens die in diesem installierte Doppelpedaleinrichtung äußerst zeitaufwendig ausbauen, was ebenfalls mit Zusatzkosten verbunden ist.

Aus der DE-B-1259719 ist eine Doppelpedaleinrichtung gemäß dem Oberbegriff des Patentanspruches 1 bekannt, deren flexible Zugglieder aus Kabelzugseilen bestehen, die aus Sicherheitsgründen für die entsprechenden Pedale jeweils doppelt vorgesehen sind. Ein Problem derartiger Kabelzüge, die üblicherweise aus Metall bestehen, besteht darin, daß wegen ihrer Steifigkeit bei den wiederholten Betätigungen der fahrschülerseitigen Pedale Schlaufen gebildet werden, die zu einer Brüchigkeit des Materials und daher zu Funktionsstörungen führen können.

Die Aufgabe der vorliegenden Erfindung besteht daher darin, eine Doppelpedaleinrichtung anzugeben, die für Fahrschulwagen verschiedener Modelle und Marken verwendbar und relativ einfach installierbar ist.

Diese Aufgabe wird durch eine Doppelpedaleinrichtung mit den Merkmalen des Patentanspruches 1 gelöst.

Der wesentliche Vorteil besteht darin, daß die erfindungsgemäße Doppelpedaleinrichtung einfach und problemlos in einem Fahrschulwagen installierbar ist. Vorteilhafterweise kann daher ein Fahrlehrer seine Wagenflotte in kürzeren Zeitabständen problemlos erneuern. Dies dient der Attraktivität der Fahrschule und auch der Verkehrssicherheit. Da die erfindungsgemäße Doppelpedaleinrichtung für alle Fahrzeugmodelle und -marken geeignet ist, muß bei dem Wechsel eines Fahrschulwagens keine neue Doppelpedaleinrichtung angeschafft werden, so daß sich Kosten einsparen lassen. Zudem ist die erfindungsgemäße Doppelpedaleinrichtung selbst relativ kostengünstig herstellbar und aufgebaut. Die erfindungsgemäße Doppelpedaleinrichtung kann aus einem Fahrschulwagen ausgebaut werden, ohne daß wesentliche sichtbare Spuren zurückbleiben.

Weitere vorteilhafte Ausgestaltungen der Erfindung gehen aus den Unteransprüche hervor. Im folgenden werden die Erfindung und deren Ausgestaltungen im Zusammenhang mit den Figuren näher erläutert. Es zeigen:
- Fig. 1: die fahrlehrer- bzw. beifahrerseitige Baugruppe der erfindungsgemäßen Doppelpedaleinrichtung;
- Fig. 2: die fahrschülerseitige Baugruppe der erfindungsgemäßen Doppelpedaleinrichtung und
- Fig. 3 bis 8: Einzelheiten der Erfindung.

Zu der Erfindung führten die folgenden Überlegungen. Eine wesentliche Vereinfachung der bekannten Doppelpedaleinrichtungen, bei denen die einzelnen Pedale über mechanische Elemente, wie z.B. über die eingangs genannten konzentrischen Rohrteile, verbunden sind, kann dadurch erreicht werden, daß eine Verbindung der entsprechenden Brems-, Gas- und Kupplungspedale über flexible Zugeinrichtungen, insbesondere über flexible, hochreißfeste Textiltaue, vorzugsweise DYNEEMA®-Zugtaue, hergestellt wird. Dabei ergeben sich erhebliche Vorteile im Hinblick auf die Herstellungskosten, die Kosten für den Ein- und Ausbau und die Verwendbarkeit ein und derselben Doppelpedaleinrichtung bei verschiedenen Fahrzeugmarken und Typen. Um die Verwendung der hochreißfesten Textiltaue für eine Doppelpedaleinrichtung möglich zu machen, war es erforderlich, sowohl fahrlehrerseitig als auch fahrschülerseitig völlig neue Baugruppen zu entwickeln, die die fahrlehrerseitigen und fahrschülerseitigen Gas-, Brems- und Kupplungspedale jeweils miteinander verbinden, wobei dafür Sorge getragen sein muß, daß die Führung der Textiltaue zwischen den beiden genannten Baugruppen ohne weiteres möglich ist. Ein besonderes Problem kommt dabei auch der Befestigung der Baugruppen am Fahrschulwagen zu, da den unterschiedlichen Fußraumgestaltungen der einzelnen Fahrzeugmodelle und -typen Rechnung getragen werden muß. Schließlich war noch das Problem der Führung der flexiblen Zugeinrichtungen und deren Anbindung an die fahrer- und beifahrerseitigen Pedale zu lösen.

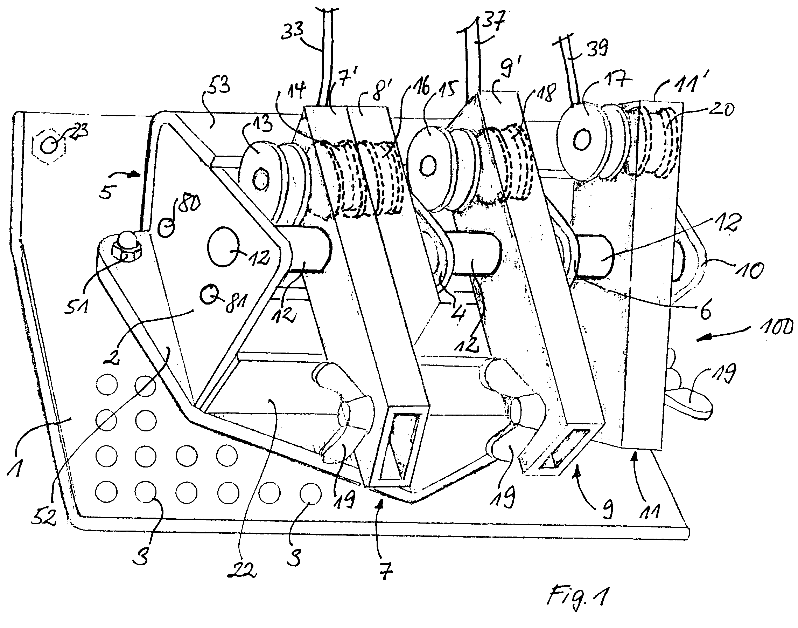

Gemäß Figur 1 besteht die beifahrerseitige Baugruppe 100 im wesentlichen aus einer Ankerplatte 1, auf der das Gehäuse 5 für die Rollen und Kipphebel montiert ist. Die Ankerplatte 1 besteht vorzugsweise aus einer gelochten, insbesondere aus Stahl bestehenden Platte, die mit der Hilfe von Schraubverbindungen 23 fest mit dem Wagenkörper verbunden wird. Zu diesem Zweck wird vorzugsweise gemäß Figur 3 mit einem Hülsenbohrer am Ort der Verschraubung 23 ein Loch in den Teppichboden 50 geschnitten, wobei der dabei entstehende Teppichpropfen aufbewahrt wird und bei der Ausmusterung des Fahrschulwagens nach Entfernen der Ankerplatte 1 später wieder eingesetzt werden kann. Es wird nun in das darunterliegende Bodenblech 32' ein Loch 32 gebohrt. In dieses Loch wird vorzugsweise das aus der Figur 3 ersichtliche Verankerungselement 45 von oben her eingesetzt. Dieses weist im wesentlichen einen Quersteg 47 und einen um eine Achse 48 in Bezug auf diesen verschwenkbaren Gewindebolzen 49 auf. Der Quersteg 47 ist mit einem Zugseil 48 verbunden. Das Verankerungselement wird mit dem Quersteg 47 voran, der zur Achse des Gewindebolzens 49 ausgerichtet ist, in die Bohrung 32 soweit eingeführt, bis der Quersteg 47 vollständig hinter der Bohrung 32 angeordnet ist. Dann wird am Zugseil 48 gezogen, so daß der Quersteg 47 quer zum Gewindebolzen 49 ausgerichtet wird und seine Anlagekanten 46 an der den Teppichboden 50 abgewandten Seite des Bodenbleches 51 anliegen. Der Gewindebolzen 49 wird dann durch ein entsprechendes Loch 3 der Ankerplatte 1 geführt und z.B. mit der Hilfe einer Unterlegscheibe und einer Mutter 23 verschraubt. Auf das freie Ende des Gewindebolzens 49 kann aus Sicherungsgründen eine abgerundete Hutmutter 23 aufgesetzt werden. Die Ankerplatte 1 kann zur Anpassung an die spezielle Gestaltung des Bodenbleches im Fußraum gebogen werden. Das Gehäuse 5 wird mit der Hilfe von Schraubverbindungen 51 an einer für die Füße des Fahrlehrers geeigneten Stelle der Ankerplatte 1 verschraubt. Hierbei ist es von Bedeutung, daß die Ankerplatte 1 vorzugsweise eine Lochplatte mit Löchern 3 ist, so daß der Ort frei gewählt und gegebenenfalls auch verändert werden kann.

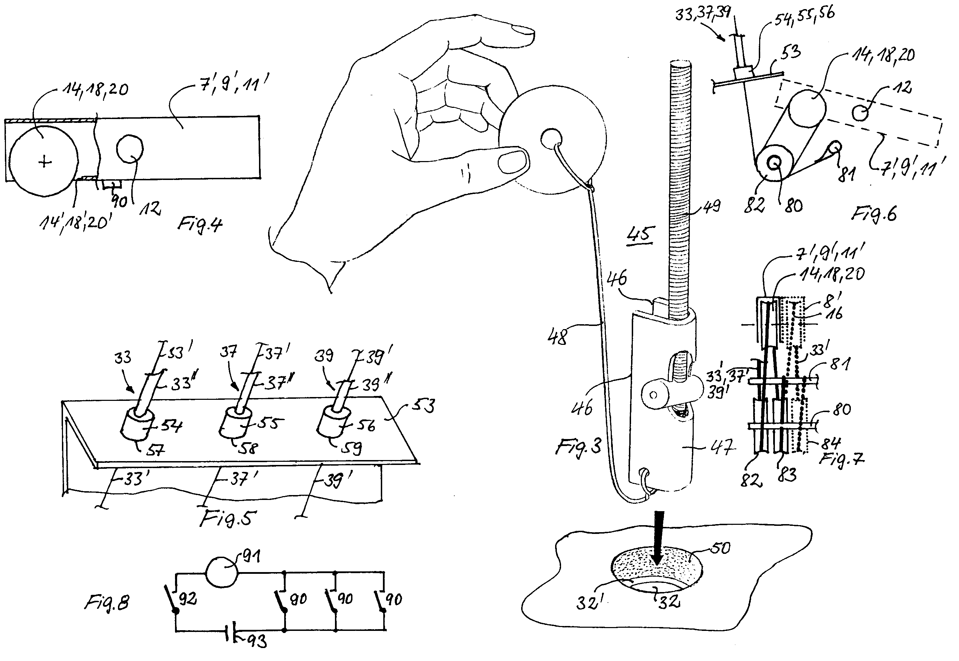

Das Gehäuse 5 weist vorzugsweise eine Bodenplatte 52 auf, an der voneinander beabstandet mehrere Montagewände 2, 4, 6 und 10 angeordnet sind, die sich vorzugsweise senkrecht zur Bodenplatte 52 erstrecken. Von der Bodenplatte 52 beabstandet verläuft zwischen den Montageplatten 2, 4, 6 und 10 eine Achse 12, auf der zwischen den Montagewänden 2 und 4 eine Kipphebelanordnung 7 für das fahrlehrerseitige Kupplungspedal, zwischen den Montagewänden 4 und 6 eine Kipphebelanordnung 9 für das fahrlehrerseitige Bremspedal und zwischen den Montagewänden 6 und 10 eine Kipphebelanordnung 11 für das fahrlehrerseitige Gaspedal angeordnet sind. Die genannten Kipphebelanordnungen weisen jeweils auf der Achse 12 verschwenkbar gelagerte Rohre 7', 9', 11' auf, die im Hinblick auf eine Verschiebung entlang der Achse 12 durch nicht näher dargestellte Einrichtungen (z.B. Abstandshülsen auf der Achse 12) gesichert sind. In die dem Fahrlehrer zugewandten Seiten der Rohre 7', 9', 11', bei denen es sich vorzugsweise um nahtlos kaltgezogene Präzisionsstahlrohre handelt, sind die Enden von entsprechenden Pedalen für den Fahrlehrer einschiebbar und mit der Hilfe von Schraubensicherungen 19, die beispielsweise die Form von leicht betätigbaren Flügelschrauben aufweisen, verschraubbar. Genauer gesagt, werden in dem Rohr 7' das Kupplungspedal, in dem Rohr 9' das Bremspedal und im dem Rohr 11' das Gaspedal verschraubt. In Bezug auf die Achse 12 sind an der anderen Seite der Rohre 7', 9', 11' Rollen 14, 18, 20 derart verdrehbar befestigt, daß die der Bodenplatte 1 zugewandten Seiten der Rollen 14, 18, 20 durch Aussparungen 14', 18', 20' der Rohre 7', 9', 11' (siehe Figur 4) nach unten in Richtung auf die Bodenplatte 52 hindurchragen. Dadurch kann erreicht werden, daß eine entsprechende Zugeinrichtung um die Rolle 14, 18, 20 verlaufen kann und nach unten geführt werden kann, wie dies später näher erläutert wird.

Die Kipphebelanordnungen 7, 9 und 11 werden jeweils durch eine Zugeinrichtung so gezogen bzw. vorgespannt, daß ihre dem Fahrlehrer zugewandten Seiten um die Achse 12 in eine vorgegebene Position nach oben verschwenkt sind in der der den Pedalen abgewandte Bereich der Kipphebelanordnungen 7, 9, 11 vorzugsweise an einem Anschlag des Gehäuses 5 anliegt, und bei der Pedalbetätigung gegen die Kraft der Zugeinrichtung nach unten gedrückt werden können, wobei die Kipphebelanordnungen 7, 9, 11 dann nach ihrer Freigabe wieder in die genannte Position gezogen werden. Die Zugeinrichtung besteht vorzugsweise jeweils aus einer, zweckmäßigerweise an einer freien Außenseite einer Kipphebelanordnung 7, 9, 11 befestigten Seilführungseinrichtung, insbesondere in der Form einer festen Rolle 13, 15 oder 17, einer drehbaren Rolle (nicht dargestellt), vorzugsweise auf einer unterhalb der Rollen 13, 15, 17 verlaufenden Achse 80, die durch Bohrungen der Montagewände 2, 4, 6, 10 geführt ist, sowie einem bandförmigen Zugglied (nicht dargestellt), das um die Achse 80 und die Rolle 13, 15 bzw. 17 verläuft und die geforderte Zugkraft aufbringt. Vorzugsweise besteht das bandartige Zugglied aus einem starken Gummiband oder dergleichen. Die Kippbewegung der Kipphebelanordnungen 7, 9, 11 wird jeweils auf Zugelemente 33, 37 und 39 übertragen, die zu der fahrschülerseitigen Baugruppe verlaufen. Vorzugsweise handelt es sich bei den Zugelementen 33, 37, 39 um Bowdenzüge, deren Zugelemente durch die eingangs genannten Textiltaue gebildet sind. Die Einrichtung zur Übertragung der Verschwenkung der Kipphebelanordnungen 7, 9, 11 auf die Zugelemente der Bowdenzüge 33, 37, 39 sind so ausgebildet, daß beim Niederdrücken der Kipphebelanordnung 7, 9, 11 die Zugelemente der Bowdenzüge 33, 37, 39 in Richtung auf die Baugruppe 100 gezogen werden. Da in der fahrschülerseitigen Baugruppe 200 die Enden der Zugelemente der Bowdenzüge 33, 37, 39 in der später beschriebenen Weise an dem Kupplungs-, Brems- bzw. Gaspedal befestigt sind, werden beim Niederdrücken der Kipphebelanordnung 7, 9, 11 diese Pedale gleichzeitig betätigen.

Im Zusammenhang mit den Figuren 6 und 7 wird nun die Einrichtung zur Übertragung der Verschwenkung der Kipphebelanordnung 7, 9 bzw. 11 auf die Zugelemente der Bowdenzüge 33, 37, 39 näher erläutert. Im folgenden sind die Hüllen der Bowdenzüge mit 33'', 37'', 39'' und die Zugelemente der Bowdenzüge mit 33', 37', 39' bezeichnet. In der insbesondere aus der Figur 5 ersichtlichen Weise, sind die Endstücke 57, 58, 59 der Bowdenzüge 33, 37, 39 an eine Platte 53 oberhalb der Achse 80 des Gehäuses 5 angesetzt, derart, daß die Zugelemente 33', 37', 39' durch Bohrungen unterhalb der Endstücke 57, 58, 59 verlaufen. Im weiteren ist das Zugelement 33', 37', 39 ' vorzugsweise über eine Flaschenzugeinrichtung mit der Kipphebelanordnung verbunden. Insbesondere verläuft das Zugelement 33', 37' bzw. 39' um eine auf der Achse 80 befindliche erste Umlenkrolle 82 von dieser ersten Umlenkrolle 82 zur Rolle 14, 18, 20 der Kipphebelanordnungen 7, 9 bzw. 11, von dieser zu einer zweiten auf der Achse 80 neben der ersten Umlenkrolle 82 befindlichen zweiten Umlenkrolle 83 und von dieser zu einer Halteachse 81, an der das Ende des Zugelementes 33', 37' bzw. 39' beispielsweise unter Bildung einer Schlaufe befestigt ist. Die Halteachse 81 verläuft in der aus der Figur 1 ersichtlichen Weise ebenfalls durch die Montagewände 2, 4, 6 und 10. Der Verlauf der Zugelemente 33', 37', 39' ist insbesondere aus den Figuren 6 und 7 deutlich erkennbar. Die bisher beschriebene Zugelementführung eignet sich insbesondere für die Kipphebelanordnungen 9 und 11 des Brems- und Gaspedales. Da im Falle des Kupplungspedales ein größerer Hub des Zugelementes 33' erforderlich ist, kann gemäß den punktierten Linien in Figur 7 neben der Rolle 14, vorzugsweise in einem neben dem Rohrteil 7' der Kipphebelanordnung 7 angeordneten weiteren Rohrteil 8' eine weitere Rolle 16 vorgesehen sein. Das Rohrteil 8' wird zusammen mit dem Rohrteil 7' betätigt. Das Zugelement 33' verläuft ausgehend von der zweiten Umlenkrolle 83 über die Rolle 16, eine dritte Umlenkrolle 84 auf der Achse 80 zur Halteachse 81 und ist dort befestigt. Es wird darauf hingewiesen, daß je nach Bedarf eine beliebige Anzahl von Umlenkrollen auf der Achse 80 und von Rollen an den Kipphebelanordnungen 7, 9, 11 vorgesehen werden können.

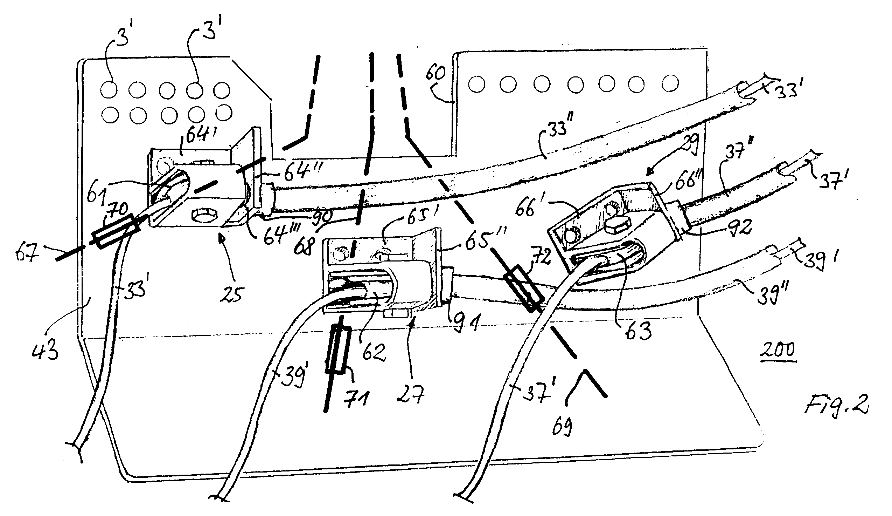

Im folgenden wird im Zusammenhang mit der Figur 2 die fahrschülerseitige Baugruppe 200 näher erläutert. Diese besteht vorzugsweise ebenfalls aus einer mit Löchern 3' versehenen Ankerplatte 43, die in der im Zusammenhang mit der Ankerplatte 1 bereits beschriebenen Weise am Bodenblech des Fahrschulwagens auf der Fahrschülerseite, d.h. also unterhalb der fahrerseitigen Pedale befestigt wird. Zur Anpassung an die Bodenblechgestaltung des Fahrschulwagens in diesem Bereich kann die Ankerplatte 43 ebenfalls gebogen werden. An ihrer oberen Seite kann die Ankerplatte 43 eine Aussparung 60 aufweisen, durch die die fahrerseitigen Pedale hindurchverlaufen. Auf der Ankerplatte 43 sind in einer geeigneten Position zum jeweiligen Pedal Rollenlagerböcke 25, 27 und 29 montierbar, vorzugsweise verschraubbar, die jeweils eine Rolle 61, 62, 63 um eine Achse parallel zur Ebene der Ankerplatte 43 verdrehbar halten. Vorzugsweise handelt es sich bei den Rollenlagerböcken um Winkelteile deren einer Schenkel 64', 65', 66' jeweils an der Ankerplatte 43 befestigt ist und deren anderer Schenkel 64'', 65'', 66'' sich senkrecht zum einen Schenkel 64', 65', 66' erstreckt. Die entsprechenden Endstücke 90, 91 92 der Bowdenzüge liegen am anderen Schenkel 64'', 65'', 66'' an, während das jeweilige Zugelement 33', 37', 39' durch ein Loch des Schenkels 64'', 65'', 66'' geführt ist und zur Rolle 61, 62 oder 63 verläuft. Im Falle des Schenkels 64'' ist das Loch dargestellt und mit 64''' bezeichnet. Das über die Rolle 61 verlaufende Zugelement 33' verläuft zum Arm 67 des Kupplungspedales. Von der Rolle 62 verläuft das Zugelement 39' zum Arm 68 des Bremspedales und von der Rolle 63 das Zugelement 37' zum Arm 69 des Gaspedales. Die Enden der Zugseile 33, 37 und 39 sind mit der Hilfe von Befestigungseinrichtungen 70, 71 und 72 an den Armen 67, 68, 69 befestigt, vorzugsweise mit der Hilfe von Klemmeinrichtungen verschraubt. Bei den Befestigungseinrichtungen 70, 71, 72 handelt es sich vorzugsweise um sogenannte Seilbremsen. Die Rollenlagerböcke 25, 27, 29 werden an der Ankerplatte 43 so verschraubt, daß die Zugelemente von den entsprechenden Rollen senkrecht nach oben zu den Befestigungsorten der Arme 67, 68 bzw. 69 verlaufen.

Die Bowdenzüge 31, 35, 38 verlaufen zwischen dem fahrerseitigen und beifahrerseitigen Fußraum unmittelbar an der Stirnwand des Fahrzeuges, nachdem zuvor die entsprechende Abdeckung entfernt wurde.

Jeder Kipphebelanordnung 7, 9, 11 ist ein elektrischer Schalter 90 zugeordnet, der beispielsweise an der Unterseite des Rohrteiles 7', 9', 11'' angeordnet ist (Figur 4) und im nichtbetätigten Zustand an einem Teil des Gehäuses 5, zweckmäßigerweise an der Achse 81 anliegt, so daß er in eine nicht leitende Schaltposition betätigt ist. Die Schalter 90 aller Kipphebelanordnungen sind gemäß Figur 8 parallel zu einer Alarmeinrichtung, z.B. einem Summer 91, geschaltet, zu dem ein Hauptschalter 92 und eine Stromquelle 93 in Reihe geschaltet sind. Bei geschlossenem Hauptschalter 92 wird der Summer 91 betätigt, wenn eines der fahrlehrerseitigen Pedale bzw. einer der diesen zugeordneten Kipphebelanordnung 7, 9, 11 betätigt wird.

## Patentansprüche

1. Doppelpedaleinrichtung für einen Fahrschulwagen mit einer fahrlehrerseitigen Baugruppe (100) und einer fahrschülerseitigen Baugruppe (200), wobei die Zusatzpedale der fahrlehrerseitigen Baugruppe (100) und die Pedale (67, 68, 69) des Fahrschulwagens zur gleichzeitigen Betätigung miteinander in Verbindung stehen, und die Verbindung zwischen den Zusatzpedalen der fahrlehrerseitigen Baugruppe (100) und den Pedalen (67, 68, 69) des Fahrschulwagens über flexible Zugglieder (33, 39, 37) hergestellt ist, dadurch gekennzeichnet, daß als Zugglieder (33, 39, 37) hochreißfeste Textiltaue verwendet sind, die in der fahrlehrerseitigen Baugruppe (100) über Rollen (14, 16, 18, 20, 82, 83, 84) und in der fahrschülerseitigen Baugruppe(200) über weitere Rollen (61, 62, 63) geführt sind.

2. Doppelpedaleinrichtung nach Anspruch 1, dadurch gekennzeichnet, daß die Zugglieder (33, 39, 37) DYNEEMA®-Zugtaue sind.

3. Doppelpedaleinrichtung nach Anspruch 1 oder 2, dadurch gekennzeichnet, daß die Zugglieder Bowdenzüge (33, 37, 39) sind, die Zugelemente (33', 37', 39') in Bowdenzughüllen (33'', 37'', 39'') enthalten.

4. Doppelpedaleinrichtung nach einem der Ansprüche 1 bis 3, dadurch gekennzeichnet, daß die fahrlehrerseitige Baugruppe (100) in einem Gehäuse (5) um eine Achse (12) verschwenkbare Kipphebelanordnungen (7, 9, 11) aufweist, an deren in Bezug auf die Achse (12) einen Seiten die Doppelpedale befestigbar sind, daß auf die anderen Seiten der Kipphebelanordnungen (7, 9, 11) diese in eine angehobene Lage vorspannende Zugeinrichtung einwirkt und daß die Zugglieder an den Kipphebelanordnungen (7, 9, 11) befestigt sind.

5. Doppelpedaleinrichtung nach Anspruch 4, dadurch gekennzeichnet, daß die Zugeinrichtung die Form eines bandartigen Zuggliedes aufweist, das an der anderen Seite der Kipphebelanordnung (7, 9, 11) und an dem Gehäuse (5) angreift.

6. Doppelpedaleinrichtung nach Anspruch 5, dadurch gekennzeichnet, daß die Kipphebelanordnung (7, 9, 11) im Bereich ihrer anderen Seite eine Führungsrolle (13, 15, 17) aufweist, um die das Zugglied verläuft und daß das Zugglied zwischen der Führungsrolle (13, 15, 17) und einer Rolle auf einer davon beabstandeten Achse (80) gespannt ist.

7. Doppelpedaleinrichtung nach einem der Ansprüche 4 bis 6, dadurch gekennzeichnet, daß die Kipphebelanordnung die Form von Rohrteilen (7, 9, 10) aufweist, die im Bereich ihrer anderen Seite eine Rolle (14, 18, 20) halten, und daß das Zugelement (33', 37', 39') in der fahrlehrerseitigen Baugruppe (100) um eine erste Umlenkrolle (82) auf einer von der Achse (12) beabstandeten weiteren Achse (80) gelagerten ersten Umlenkrolle (82) geführt ist, von dieser zur Rolle (14, 18, 20) der Kipphebelanordnung (7, 9, 11) verläuft, von der Rolle (14, 18, 20) der Kipphebelanordnung (7, 9, 11) zu einer zweiten auf der Achse (80) befindlichen Umlenkrolle (83) und von dieser zu einer Halteeinrichtung (81) verläuft, an der das Ende des Zugelementes (33', 37', 39') befestigt ist.

8. Doppelpedaleinrichtung nach einem der Ansprüche 4 bis 7, dadurch gekennzeichnet, daß das Gehäuse (5) voneinander beabstandete Montagewände (2, 4, 6, 10) aufweist, daß zwischen jeweils zwei Montagewänden eine Kipphebelanordnung (7, 9, 11) angeordnet ist und daß die Achse (12) in den Montagewänden (2, 4, 6, 10) gehalten ist.

9. Doppelpedaleinrichtung nach Anspruch 8, dadurch gekennzeichnet, daß das Gehäuse (5) an einer am Bodenblech des Fahrschulwagens befestigten Ankerplatte (1) verschraubbar ist.

10. Doppelpedaleinrichtung nach Anspruch 9, dadurch gekennzeichnet, daß die Ankerplatte (1) rasterförmige Öffnungen (3) aufweist, in denen das Gehäuse (5) verschraubbar ist.

11. Doppelpedaleinrichtung nach Anspruch 9 oder 10, dadurch gekennzeichnet, daß die Ankerplatte (1) aus Edelstahl besteht.

12. Doppelpedaleinrichtung nach einem der Ansprüche 3 bis 11, dadurch gekennzeichnet, daß das Gehäuse (5) eine Platte (53) aufweist, an dem die der fahrlehrerseitigen Baugruppe (100) zugewandten Endstücke (57, 58, 59) der Bowdenzüge (33, 37, 39) anliegen und daß die Platte (53) Löcher aufweist, durch die die Zugelemente (33', 37', 39') der Bowdenzüge (33, 37, 39) zu der ersten Umlenkrolle (82) verlaufen.

13. Doppelpedaleinrichtung nach einem der Ansprüche 1 bis 12, dadurch gekennzeichnet, daß die fahrschülerseitige Baugruppe (200) eine Ankerplatte (43) mit rasterförmigen Löchern (3') aufweist, die am Bodenblech des Fahrschulwagens befestigt ist.

14. Doppelpedaleinrichtung nach Anspruch 13, dadurch gekennzeichnet, daß an der Ankerplatte (43) der fahrschülerseitigen Baugruppe (200) in Löchern (3') Rollenlagerböcke (25, 27, 29) montierbar sind, die jeweils eine Rolle (61, 62, 63) aufweisen, um die die Zugelemente (33', 39', 37') herumverlaufen, deren der fahrschülerseitigen Baugruppe (200) zugewandten Enden an Befestigungseinrichtungen (70, 71, 72) der Pedale (67, 68, 69) des Fahrschulwagens befestigt sind.

15. Doppelpedaleinrichtung nach Anspruch 14, dadurch gekennzeichnet, daß Befestigungseinrichtungen (70, 71, 72) die Enden der Zugelemente (33', 39', 37') an den Pedalen (67, 68, 69) des Fahrschulwagens befestigende Klemmeinrichtungen sind.

16. Doppelpedaleinrichtung nach Anspruch 14 oder 15 in Verbindung mit Anspruch 3, dadurch gekennzeichnet, daß die Rollenlagerböcke Winkelteile mit zwei Schenkein (64', 64'', 65', 65'', 66', 66'') sind, deren einer Schenkel (64', 65', 66') an der Ankerplatte (43) verschraubt ist und deren anderer Schenkel (64'', 65'', 66') eine Anlage für das der fahrschülerseitigen Baugruppe (200) zugewandte Endstück (90, 91, 92) der Bowdenzüge (33, 39, 37) bildet und daß das Zugelement (33', 39', 37') durch ein Loch des zweiten Schenkels (64'', 65'', 66'') geführt ist.

17. Doppelpedaleinrichtung nach einem der Ansprüche 4 bis 16, dadurch gekennzeichnet, daß jeder Kippelhebelanordnung (7, 9, 11) ein Schalter (90) zugeordnet ist, der in der durch die Zugeinrichtung bewirkten Lage der Kipphebelanordnung (7, 9, 11) an einem Punkt des Gehäuses (5) anliegt und in seine eine elektrische Unterbrechung bewirkende Lage geschaltet ist, und daß die Schalter (90) der Kipphebelanordnungen (7, 9, 11) parallel zueinander und parallel zu einer Reihenschaltung aus einem Hauptschalter (92), einer Warneinrichtung (91) und einer Stromquelle (93) geschaltet sind.

## Claims

1. A dual pedal device for a driving school car having one subassembly (100) on the driving instructor's side and one subassembly (200) on the learner driver's side, with the additional pedals of the subassembly (100) on the driving instructor's side and the pedals (67, 68, 69) of the driving school car being in communication with one another for simultaneous actuation, and the connection between the additional pedals of the subassembly (100) on the driving instructor's side and the pedals (67, 68, 69) of the driving school car being produced via flexible traction members (33, 39, 37),
**characterised in that** high-tenacity textile cables, which in the subassembly (100) on the driving instructor's side are guided over rollers (14, 16, 18, 20, 82, 83, 84) and in the subassembly (200) on the learner driver's side are guided over further rollers (61, 62, 63), are used as traction members (33, 39, 37).

2. A dual pedal device according to Claim 1,
**characterised in that** the traction members (33, 39,37) are DYNEEMA® traction cables.

3. A dual pedal device according to Claim 1 or 2,
**characterised in that** the traction members are Bowden wires (33, 37, 39) which contain traction elements (33', 37', 39') in Bowden wire casings (33'', 37'', 39'').

4. A dual pedal device according to one of Claims 1 to 3,
**characterised in that** the subassembly (100) on the driving instructor's side comprises rocker arm arrangements (7, 9, 11) which can swivel in a housing (5) around a shaft (12), to the one sides with respect to the shaft (12) of which the dual pedals can be attached,
**in that** this traction device prestressing into a raised position acts on the other sides of the rocker arm arrangements (7, 9, 11),
**and in that** the traction members are attached to the rocker arm arrangements (7, 9, 11).

5. A dual pedal device according to Claim 4,
**characterised in that** the traction device takes the form of a belt-type traction member which acts on the other side of the rocker arm arrangement (7, 9, 11) and on the housing (5).

6. A dual pedal device according to Claim 5,
**characterised in that** the rocker arm arrangement (7, 9, 11) comprises a guide roller (3, 15, 17) in the region of its other side, around which the traction member passes,
**and in that** the traction member is tensioned between the guide roller (13, 15, 17) and a roller on a shaft (80) spaced therefrom.

7. A dual pedal device according to one of Claims 4 to 6,
**characterised in that** the rocker arm arrangement takes the form of tubular parts (7, 9, 10) which in the region of their other side retain a roller (14, 18, 20), and in that the traction element (33', 37', 39) in the subassembly (100) on the driving instructor's side is guided around a first deflection roller (82) first deflection roller (82) mounted on a further shaft (80) spaced from the shaft (12), runs from said roller to the roller (14, 18, 20) of the rocker arm arrangement (7, 9, 11), from the roller(14, 18, 20) of the rocker arm arrangement (7, 9, 11) to a second deflection roller (83) situated on the shaft (80) and runs therefrom to a retention device (81), to which the end of the traction element (33', 37', 39') is attached.

8. A dual pedal device according to one of Claims 4 to 7,
**characterised in that** the housing (5) has mounting walls (2, 4, 6, 10) spaced from one another,
**in that** a rocker arm arrangement (7, 9, 11) is disposed between two mounting walls in each case,
**and in that** the shaft (12) is held in the mounting walls (2, 4, 6, 10).

9. A dual pedal device according to Claim 8,
**characterised in that** the housing (5) can be screwed to an anchor plate (1) attached to the floor panel of the driving school car.

10. A dual pedal device according to Claim 9,
**characterised in that** the anchor plate (1) has grid-shaped openings (3) in which the housing (5) can be screwed.

11. A dual pedal device according to Claim 9 or 10,
**characterised in that** the anchor plate (1) is made from special steel.

12. A dual pedal device according to one of Claims 3 to 11,
**characterised in that** the housing (5) comprises a plate (53) against which the end pieces (57, 58, 59) of the Bowden wires (33, 37, 39) faced towards the subassembly (100) on the driving instructor's side abut,
**and in that** the plate (53) has holes through which the traction elements (33', 37', 39') of the Bowden cables (33, 37, 39) pass to the first deflection roller (82).

13. A dual pedal device according to one of Claims 1 to 12,
**characterised in that** the subassembly (200) on the learner driver's side comprises an anchor plate (43) having grid-shaped holes (3') which is attached to the floor panel of the driving school car.

14. A dual pedal device according to Claim 13,
**characterised in that** roller bearing blocks (25, 27, 29) can be mounted in holes (3') on the anchor plate (43) of the subassembly (200) on the learner driver's side, which in each case comprise a roller (61, 62, 63) in order to run around the traction elements (33', 39', 37'), whose ends faced towards the subassembly (200) on the learner driver's side are attached to attachment devices (70, 71, 72) of the pedals (67, 68, 69) of the driving school car.

15. A dual pedal device according to Claim 14,
**characterised in that** the attachment devices (70, 71, 72) are clamping devices attaching the ends of the traction elements (33', 39', 37') to the pedals (67, 68, 69) of the driving school car.

16. A dual pedal device according to Claim 14 or 15 in conjunction with Claim 3,
**characterised in that** the roller bearing blocks are angled parts having two legs (64', 64'', 65', 65'', 66', 66''), the one leg (64', 65', 66') of which is screwed to the anchor plate (43) and the other leg (64'', 65'', 66'') of which forms a bearing face for the end piece (90, 91, 92) of the Bowden wires (33, 39, 37) faced towards the subassembly (200) on the learner driver's side,
**and in that** the traction element (33', 39', 37') is passed through a hole in the second leg (64'', 65'', 66').

17. A dual pedal device according to one of Claims 4 to 16,
**characterised in that** a switch (90), which in the position of the rocker arm arrangement (7, 9, 11) produced by the traction device abuts a point of the housing (5) and is switched into its position producing an electrical interruption, is associated with each rocker arm arrangement (7, 9, 11),
**and in that** the switches (90) of the rocker arm arrangements (7, 9, 11) are connected parallel to one another and parallel to a series circuit consisting of a main switch (92), a warning device (91) and a current source (93).

## Revendications

1. Dispositif de double commande (doubles pédales pour un véhicule-école comprenant un ensemble (100) côté instructeur et un ensemble (200) côté élève, les pédales additionnelles de l'ensemble (100) côté instructeur et les pédales (67, 68, 69) du véhicule-école étant en liaison réciproque en vue de l'actionnement simultané, la liaison entre les pédales additionnelles de l'ensemble (100) côté instructeur et les pédales (67, 68, 69) du véhicule-école étant établie par des moyens de traction flexibles (33, 39, 37), caractérisé par le fait que les moyens de traction (33, 39, 37) comprennent des câbles textiles à haute résistance de rupture qui passent dans l'ensemble (100) côté instructeur sur des poulies (14, 16, 18, 20, 82, 83, 84) et dans l'ensemble (200) côté élève sur d'autres poulies (61, 62, 63).

2. Dispositif de double commande suivant la revendications 1, caractérisé par le fait que les moyens de traction (33, 39, 37) comprennent des câbles de traction DYNEEMA®.

3. Dispositif de double commande suivant la revendication 1 ou 2, caractérisé par le fait que les moyens de traction sont constitués par des transmissions (33, 37, 39) du type Bowden, comprenant des éléments de traction (33', 37', 39') disposés dans des gaines (33'', 37'', 39'').

4. Dispositif de double commande suivant l'une des revendications 1 à 3, caractérisé par le fait que l'ensemble (100) côté instructeur comprend des agencements de leviers pivotants ou palonniers (7, 9, 11) montés pivotants autour d'un axe (12) dans un boîtier (5), que les pédales peuvent être fixées sur un côté de ces agencements de palonniers (7, 9, 11) par rapport à l'axe (12), qu'un dispositif de traction agit sur l'autre côté des agencements de palonniers (7, 9, 11) en sollicitant ces derniers dans une position soulevée, et que les moyens de traction sont fixés aux agencements de palonniers (7, 9, 11).

5. Dispositif de double commande suivant la revendication 4, caractérisé par le fait que le dispositif de traction présente la forme d'un moyen de traction en bande agissant entre l'autre côté de l'agencement de palonnier (7, 9, 11) et le boîtier (5).

6. Dispositif de double commande suivant la revendication 5, caractérisé par le fait que l'agencement de palonnier (7, 9, 11) présente dans la zone de son autre côté une poulie de guidage (13, 15, 17) sur laquelle passe le moyen de traction, et que le moyen de traction est tendu entre la poulie de guidage (13, 15, 17) et une poulie sur un axe (80) éloigné de la poulie de guidage.

7. Dispositif de double commande suivant l'une des revendications 4 à 6, caractérisé par le fait que l'agencement de palonnier présente la forme de tronçons de tubes (7, 9, 10) qui portent une poulie (14, 18, 20) dans la zone de leur autre côté, et que l'élément de traction (33', 37', 39') passe, dans l'ensemble (100) côté instructeur, autour d'une première poulie de déviation (82) montée sur un autre axe (80) éloigné de l'axe (12), de là vers la poulie (14, 18, 20) de l'agencement de palonnier (7, 9, 11), de là vers une deuxième poulie de déviation (83) se trouvant sur l'autre axe (80) et de là vers un dispositif de maintien (81) auquel est fixée l'extrémité de l'élément de traction (33', 37', 39').

8. Dispositif de double commande suivant l'une des revendications 4 à 7, caractérisé par le fait que le boîtier (5) présente des parois de montage (2, 4, 6, 10) espacées les unes des autres, qu'un agencement de palonnier (7, 9, 11) est disposé entre chaque fois deux parois de montage, et que l'axe (12) est maintenu dans les parois de montage (2, 4, 6, 10).

9. Dispositif de double commande suivant la revendication 8, caractérisé par le fait que le boîtier (5) peut être fixé par vis à une plaque d'ancrage (11) susceptible d'être fixé sur la tôle de plancher du véhicule-école.

10. Dispositif de double commande suivant la revendication 9, caractérisé par le fait que la plaque d'ancrage (1) présente un réseau d'ouvertures (3) à l'aide desquelles le boîtier (5) peut être fixé par vis.

11. Dispositif de double commande suivant la revendication 9 ou 10, caractérisé par le fait que la plaque d'ancrage (1) est en acier spécial.

12. Dispositif de double commande suivant l'une des revendications 3 à 11, caractérisé par le fait que le boîtier (5) présente une plaque (53) contre laquelle porte les pièces d'extrémité (57, 58, 59) des transmissions Bowden (33, 37, 39), tournées vers l'ensemble (100) côté instructeur et que la plaque (53) présente des trous traversés par les éléments de traction (33', 37', 39') des transmissions Bowden (33, 37, 39) sur leur trajet vers la première poulie de déviation (82).

13. Dispositif de double commande suivant l'une des revendications 1 à 12, caractérisé par le fait que l'ensemble (200) côté élève présente une plaque d'ancrage (43) avec un réseau de trous (3'), cette plaque pouvant être fixée à la tôle de plancher du véhicule-école.

14. Dispositif de double commande suivant la revendication 13, caractérisé par le fait que la plaque d'ancrage (43) de l'ensemble (200) côté élève comporte des trous (3') pour le montage de supports de poulies (25, 27, 29) portant chacun une poulie (61, 62, 63) sur laquelle passent les éléments de traction (33', 39', 37') dont les extrémités tournées vers l'ensemble (200) côté élève sont fixées à des dispositifs de fixation (70, 71, 72) des pédales (67, 68, 69) du véhicule-école.

15. Dispositif de double commande suivant la revendication 14, caractérisé par le fait que les dispositifs de fixation (70, 71, 72) sont constitués par des dispositifs de serrage par lesquels les extrémités des éléments de traction (33', 39', 37') sont fixées aux pédales (67, 68, 69) du véhicule-école.

16. Dispositif de double commande suivant la revendications 14 ou 15, en combinaison avec la revendication 3, caractérisé par le fait que les supports de poulies sont constitués par des pièces en équerre avec deux branches (64', 64'', 65', 65'', 66', 66'') dont une branche (64', 65', 66') est fixée par vis à la plaque d'ancrage (43) et dont l'autre branche (64'', 65'', 66'') forme un appui pour la pièce d'extrémité (90, 91, 92) des transmissions Bowden (33, 39, 37), tournée vers l'ensemble (200) côté élève, et que l'élément de traction (33', 39', 37') passe à travers un trou de la deuxième branche (64'', 65'', 66'').

17. Dispositif de double commande suivant l'une des revendications 4 à 16, caractérisé par le fait qu'à chaque agencement de palonnier (7, 9, 11), est associé un interrupteur (90) qui, dans la position que l'agencement de palonnier (7, 9, 11) prend sous l'action du dispositif de traction, est appliqué contre un point du boîtier (5) et se trouve dans sa position provoquant une interruption électrique, et que les interrupteurs (90) des agencements de palonniers (7, 9, 11) sont montés en parallèle les uns avec les autres et en parallèle avec un montage série comprenant un interrupteur principal (92), un dispositif avertisseur (91) est une source de courant (93).
